# EUROPÄISCHE PATENTANMELDUNG

(11) **EP 0 962 375 A2**
(43) Veröffentlichungstag der Anmeldung: **08.12.1999**
(21) Anmeldenummer: 99109565.4
(22) Anmeldetag: 14.05.1999
(51) Int. Cl.: B61D 45/00, B60P 7/08

(54) **Vorrichtung zur Sicherung von Ladungen auf der Ladefläche von Fahrzeugen**

(30) Priorität: 03.06.1998 DE 19824678
(71) Anmelder: Deutsche Bahn Aktiengesellschaft, 10365 Berlin (DE)
(72) Erfinder: Kramer, Ulrich, 32425 Minden (DE); Wackermann, Peter, 31515 Wunstorf (DE); Meyer, Heinrich, 32429 Minden (DE); Prasuhn, Eckhard, 32423 Minden (DE)

(57) **Zusammenfassung**

Die Erfindung betrifft eine Vorrichtung zur Sicherung von Ladungen auf der Ladefläche von Fahrzeugen gegen auftretende Transportbeanspruchungen, vorzugsweise zum Schutz von Querverlagerungen von Ladegütern auf Eisenbahnfahrzeugen.

Aufgabe der Erfindung ist es, eine kostengünstige und möglichst einfache Vorrichtung zu schaffen, die es ermöglicht, Ladungen gegen Querverschub zu sichern.

Dies wird insbesondere dadurch erreicht, daß ein oder mehrere Ladungssicherungsmittel an verschiedenen Stellen in Arretierungsleisten die im Wagenboden angebracht sind, eingeführt werden können und somit das Ladegut vorzugsweise quer zur Wagenlängsachse sichern können.

## Beschreibung

Die Erfindung betrifft eine Vorrichtung zur Sicherung von Ladungen auf der Ladefläche von Fahrzeugen gegen auftretende Transportbeanspruchungen, vorzugsweise zum Schutz von Querverlagerungen von Ladegütern auf Eisenbahnfahrzeugen.

Bei Eisenbahntransporten sind die Güter Beanspruchungen ausgesetzt. Die Beladevorschriften Band 1, Anlage II zum RIV-Übereinkommen, veröffentlicht im Deutschen Eisenbahn-Gütertarif Teil I, Abt. A, geben Auskunft, wie den Transportbeanspruchungen bei der Verladung der Güter im Rahmen der Ladungssicherung Rechnung zu tragen ist.

Die Maßnahmen zur Ladungssicherung müssen die Betriebssicherheit gewährleisten und sollen Schäden an den Güter und Güterwagen verhindern.

Als Ladungssicherungsmaßnahmen sind neben den in den Beladevorschriften aufgeführten Maßnahmen folgende weitere Vorrichtungen bekannt:

Aus der DE 76 25 690 U1 und US 27 43 684 ist eine Vorrichtung zur Sicherung der Ladung gegen verrutschen auf der Ladefläche eines Nutzfahrzeuges bekannt, die auf der Ladefläche Lochschienen aufweisen, die mit der Ladefläche nach oben bündig abschließen und in deren Löcher Halteklötze verankerbar sind.

Der Nachteil besteht darin, daß bei diesem bekannten Stand der Technik eine Sicherung des Ladegutes in Querrichtung nur unzulänglich gegeben ist.

Ausgehend von einer Erhöhung der Regelgeschwindigkeit für Güterwagen auf 100 km/h bzw. 120 km/h und der dadurch steigenden Beschleunigungen auf das Ladegut in Querrichtung, bestand die Aufgabe der Erfindung darin, vorwiegend in gedeckte Güterwagen eine kostengünstige Vorrichtung zu schaffen, die es auf einfachste und schnellste Weise ermöglicht, unter Vermeidung der aus dem Stand der Technik bekannten Nachteile, Ladungen gegen Querverschub zu sichern.

Diese Aufgabe wird erfindungsgemäß dadurch gelöst, daß ein oder mehrere Ladungssicherungsmittel, welches ein loses Teil oder ein fest mit dem Güterwagen verbundenes Teil sein kann, an verschiedenen Stellen in Arretierungsleisten, die im Wagenboden integriert sind, befestigt und verriegelt werden kann und somit das Ladegut vorzugsweise quer zur Wagenlängsachse sichern und positionieren kann.

Die Erfindung ist nachstehend an einem Ausführungsbeispiel näher erläutert.

Die zeichnerischen Darstellungen zeigen in
- Fig. 1: eine Seitenansicht und eine Draufsicht der im Wagenboden angebrachten Arretierungsleisten
- Fig. 2: eine Darstellung der Arretierungsleisten in der Draufsicht
- Fig. 3: eine Draufsicht des Ladungssicherungsmittels
- Fig. 4: Schnitte durch das Ladungssicherungsmittel
- Fig. 5: Darstellung des Ladungssicherungsmittels in Schrägstellung und Normalstellung.

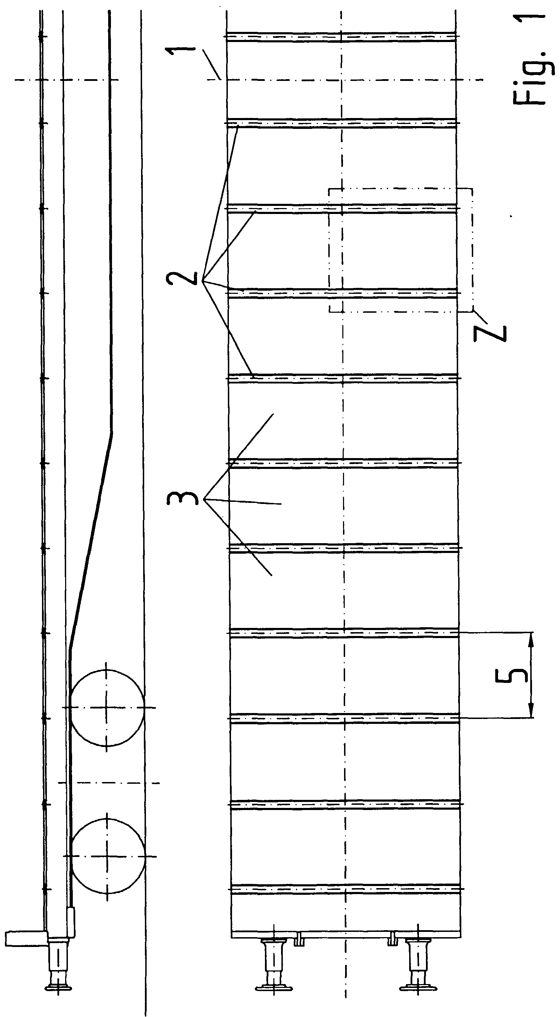

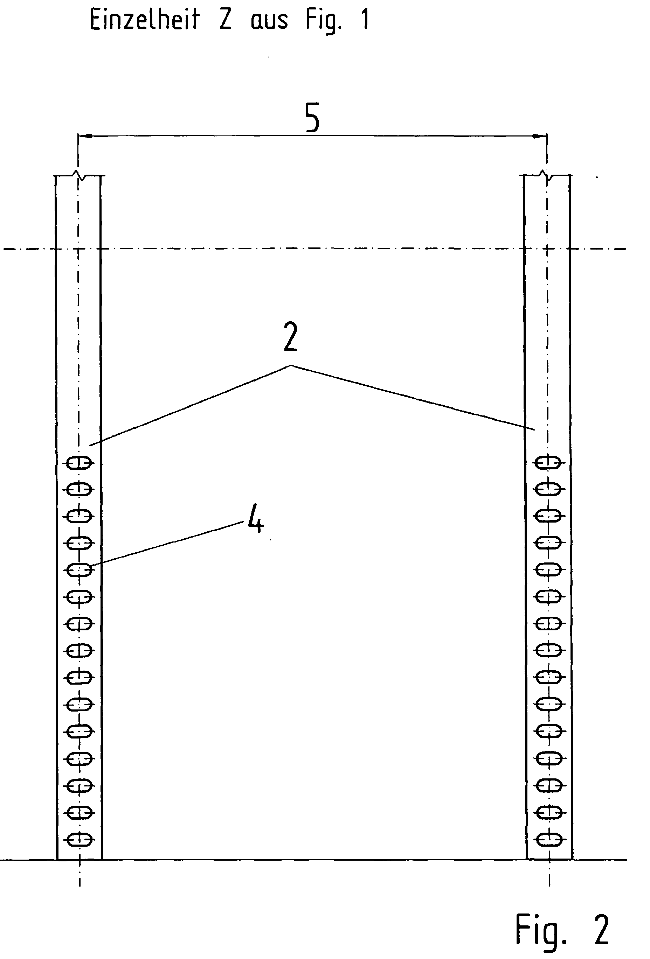

Wie in Fig. 1 und 2 dargestellt, sind auf der Ladefläche eines Transportfahrzeuges über die gesamte Wagenbreite in einem zweckmäßigen Abstand von der Fahrzeugquerachse (1) mehrere Arretierungsleisten (2), die nicht über die Oberfläche des Fußbodens (3) hinausragen, angebracht. Der Abstand (5) der Arretierungsleisten (2) untereinander ist auf die Stützweite zwischen den Bolzen (6) (7) abgestimmt und kann darüber hinaus frei festgelegt werden.

Von dem Abstand (5) der Arretierungsleisten (2) untereinander und damit der Stützweite zwischen den Bolzen (6) (7) ist die Festigkeit des Ladungssicherungsmittels abhängig.

Die Arretierungsleisten (2) bestehen vorzugsweise aus U-förmigen Profilen in deren Stegen runde Löcher (4) oder Langlöcher (4) in Abständen, die auf dem Abstand zwischen den Bolzen (6) und Bolzen mit Nase (7) des Ladungssicherungsmittels abgestimmt sind, durchgängig über die gesamte Länge der Arretierungsleisten (2) oder nur in den beiden Endbereichen in den Arretierungsleisten (2), vorhanden sind.

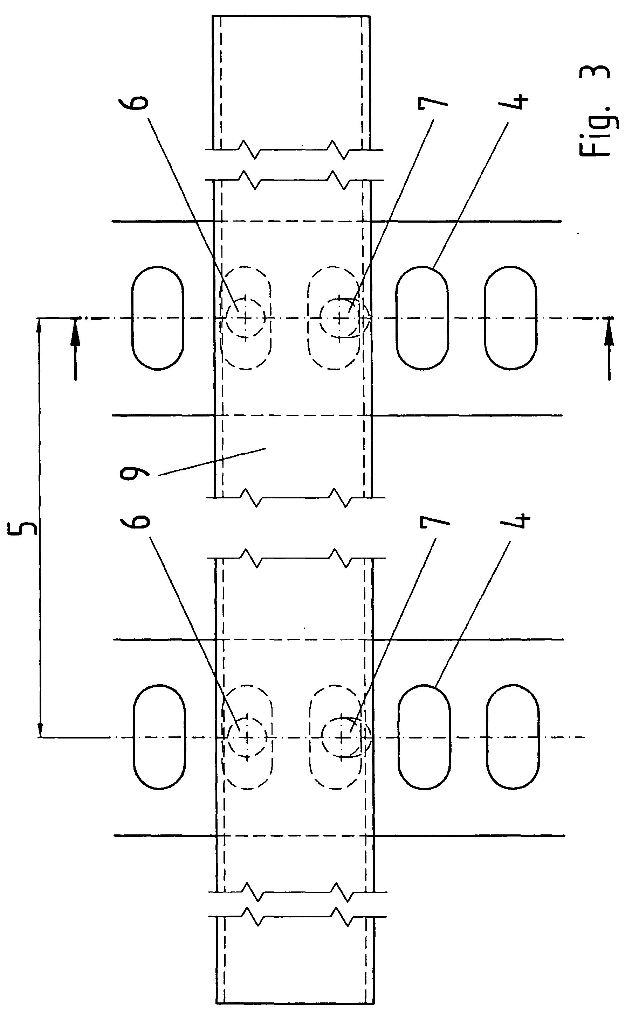

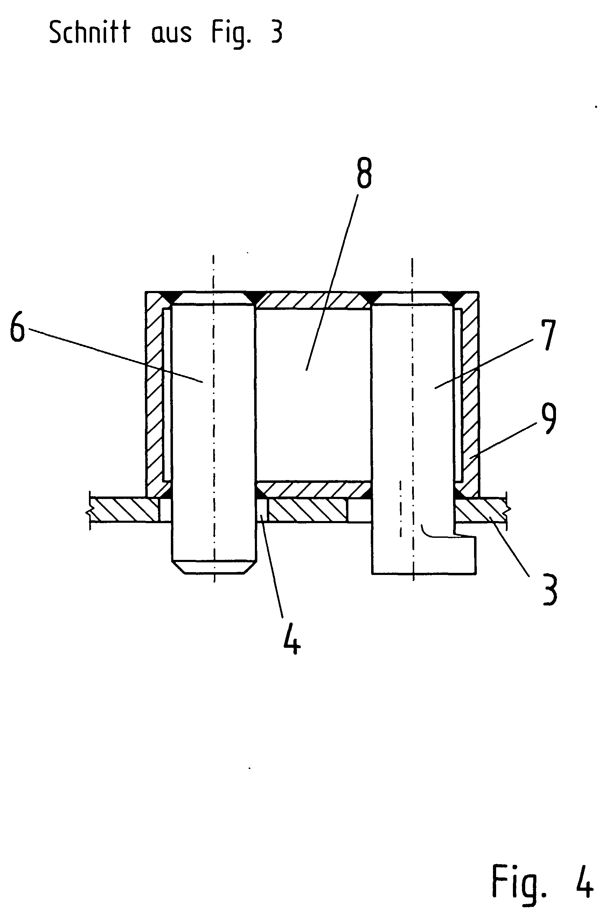

Das Ladungssicherungsmittel (8), welches in Fig. 3,.4 und 5 dargestellt ist, besteht vorzugsweise aus einem Rechteckrohr (9) mit vier eingeschweißten Bolzen.

Die Stützweite (5) der Bolzen (6)(7) zu den benachbarten Bolzen (6)(7) entspricht dem Abstand der Arretierungsleisten untereinander.

Der Abstand des Bolzens (6) von den Bolzen mit Nase (7) entspricht dem Teilungsmaß der Löcher oder Langlöcher (4) in der Arretierungsleiste (2).

Die Bolzen (6) und (7) sind auf einer Seite durch die Wandung des Rechteckrohres (9) soweit hindurchgeführt, daß ein sicherer Halt des Ladungssicherungsmittels (8) in den Löchern (4) der Arretierungsleiste gewährleistet ist. Der Bolzen (7) ist an dem Ende, welches in die Löcher (4) der Arretierungsleiste (2) eingeführt ist, mit einer Nase versehen, die einen sicheren Sitz bei Belastung des Ladungssicherungsmittels (8) in den Arretierungsleisten (2) gewährleistet.

Nach Einführung der beiden Bolzen mit Nase (7) des Ladungssicherungsmittels (8) in die Löcher (4) der Arretierungsleisten (2) wird das Ladungssicherungsmittel (8) abgesenkt und dadurch die Bolzen (6) ebenfalls in die benachbarten Löcher (4) eingeführt.

Da die Löcher (4) der Arretierungsleiste (2) einen größeren Durchmesser als die Bolzen (6) und (7) aufweisen, hat das Ladungssicherungsmittel (8) nach Einführung in die Löcher (4) der Arretierungsleisten (2) ein gewisses Spiel.

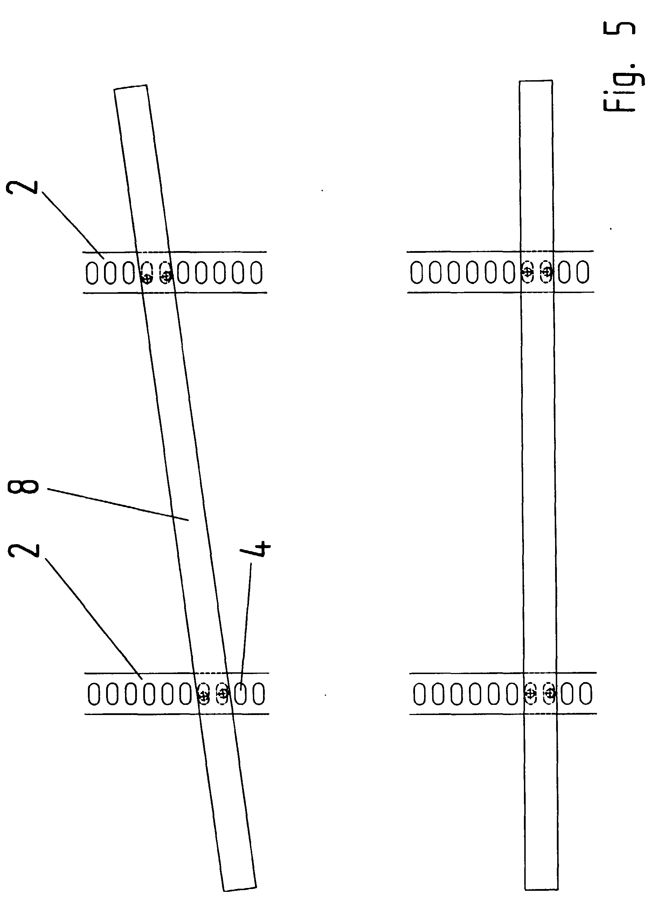

Dadurch ist ein Schrägstellen des Ladungssicherungsmittels (8) auf den Arretierungsleisten (2) - siehe Fig. 5 - möglich.

### Verwendete Bezugszeichen:

- 1: Fahrzeugquerachse
- 2: Arretierungsleiste
- 3: Fußbodenoberfläche
- 4: Langlöcher oder runde Löcher
- 5: Abstand der Arretierungsleisten untereinander entspricht Stützweite zwischen den Bolzen
- 6: Bolzen
- 7: Bolzen mit Nase
- 8: Ladungssicherungsmittel
- 9: Rechteckrohr

## Patentansprüche

1. Vorrichtung zur Sicherung von Ladungen auf der Ladefläche von Fahrzeugen, die mit Arretierungsleisten (2) ausgerüstet sind, die nicht über die Oberfläche des Fußbodens (3) hinausragen, dadurch gekennzeichnet, daß ein Ladungssicherungsmittel (8) aus einem Rechteckrohr (9), in dem paarweise ein Bolzen (6) und ein Bolzen mit Nase (7) eingeschweißt sind, besteht.

2. Vorrichtung nach Anspruch 1, dadurch gekennzeichnet, daß die Abstände der Bolzen (6) und (7) zueinander einerseits auf das Teilungsmaß der Löcher (4) in den Arretierungsleisten (2) und andererseits auf die Arretierungsleisten (2) selbst (5) abgestimmt ist.

3. Vorrichtung nach Anspruch 1 und 2, dadurch gekennzeichnet, daß die Bolzen (6) und (7) auf einer Seite durch die Wandung des Rechteckrohres (9) hindurchgeführt ist.

4. Vorrichtung nach Anspruch 1 bis 3, dadurch gekennzeichnet, daß die Bolzen (6) und (7)einen kleineren Durchmesser aufweisen, als die Löcher (4) der Arretierungsleisten (2), wodurch ein Schrägstellen des Ladungssicherungsmittels (8) auf den Arretierungsleisten (2) möglich ist.
